(19) Europäisches Patentamt

European Patent Office

Office européen des brevets

(11) Veröffentlichungsnummer: **0 392 145 B1**

(12) **EUROPÄISCHE PATENTSCHRIFT**

(45) Veröffentlichungstag der Patentschrift: **28.12.94**

(21) Anmeldenummer: **90102158.4**

(22) Anmeldetag: **03.02.90**

(51) Int. Cl.⁵: **B32B  17/10**, C03C 27/12, B32B 31/20, B29C 65/78

(54) **Verfahren und Vorrichtung zur Herstellung von Verbundsicherheitsglas aus mehreren Schichten und Verbundsicherheitsglas, hergestellt nach dem Verfahren.**

(30) Priorität: **13.02.89 DE 3904191**

(43) Veröffentlichungstag der Anmeldung:
**17.10.90 Patentblatt  90/42**

(45) Bekanntmachung des Hinweises auf die Patenterteilung:
**28.12.94 Patentblatt  94/52**

(84) Benannte Vertragsstaaten:
**BE DE ES FR GB IT NL SE**

(56) Entgegenhaltungen:
**EP-A- 0 077 672**
**US-A- 1 836 785**

**IBM TECHNICAL DISCLOSURE BULLETIN, Band 27, Nr. 4B, September 1984, S. 2579-2581, New York, US; D.A. CHANCE et al.: "Method for large area lamination,without distortion, of patterned KAPTON to mating substrates"**

(73) Patentinhaber: **HOECHST AKTIENGESELL-SCHAFT**

**D-65926 Frankfurt (DE)**

(72) Erfinder: **Grolig, Gerhard, Dr., Dipl.-Phys.**
**Gartenstrasse 6**
**D-6082 Mörfelden-Walldorf (DE)**
Erfinder: **Küchler, Manfred, Dipl.-Ing.**
**Bleibiskopfstrasse 5**
**D-6370 Oberursel (DE)**
Erfinder: **Boening, Peter**
**Erbacherstrasse 2**
**D-6200 Wiesbaden (DE)**
Erfinder: **Reinhard, Günter**
**Hegarstrasse 23**
**D-6000 Frankfurt/Main 71 (DE)**

**Beschreibung**

Die Erfindung betrifft ein Verfahren zur Herstellung von Verbundsicherheitsglas aus mehreren Schichten, von denen einige Funktionsschichten sind.

Verbundsicherheitsglas gehört zu den heute oft verwendeten Verglasungsmaterialien. Beispielsweise besteht ein großer Teil der Kraftfahrzeugscheiben aus Verbundsicherheitsglas. Auch in der Gebäudeverglasung wird Verbundsicherheitsglas eingesetzt.

Das heute übliche Verbundsicherheitsglas besteht im allgemeinen aus drei Lagen, indem zwei Glasscheiben durch eine Folie aus Polyvinylbutyral miteinander verbunden sind. Derartige Glaslaminate bieten ein hohes Maß an Sicherheit, da im Fall einer stoßartigen Belastung die Folie aus Polyvinylbutyral elastisch mechanische Energie aufnimmt und möglicherweise entstehende Glassplitter an der Folie haften bleiben.

Die Anforderungen, die heute an Verbundsicherheitsglas gestellt werden, sind jedoch nicht auf den Sicherheitsaspekt beschränkt. In bestimmten Fällen ist es vielmehr erwünscht, daß derartige Verbundsicherheitsgläser zusätzliche Funktionen erfüllen. Es kann z.B. erforderlich sein, daß die Scheibe aus Verbundsicherheitglas einen speziellen Wärmeschutz oder Schutz vor starker Sonneneinstrahlung bietet. Weitere Anforderungen, die z.B. speziell an Kraftfahrzeug-Windschutzscheiben gestellt werden, sind die elektrische Beheizbarkeit und die Möglichkeit, sogenannte Überkopf-Displays aufzunehmen.

Eine Möglichkeit, Verbundsicherheitsglas mit zusätzlichen Funktionen auszustatten, besteht darin, dünne Schichten in das Glaslaminat zu integrieren. Dies kann dadurch geschehen, daß eine oder mehrere Funktionsschichten auf derjenigen Seite einer der beiden Glasscheiben aufgebracht werden, die in dem anschließenden Laminierprozeß der Polyvinylbutyralfolie zugewandt ist. Einzelne Glasscheiben zu beschichten, ist sehr aufwendig und teuer. Bei der Herstellung von Windschutzscheiben für Kraftfahrzeuge kommt die Schwierigkeit hinzu, daß die beschichteten, zunächst ebenen Scheiben noch einen Biegeprozeß unter Wärme durchlaufen müssen, was leicht zum Zerreißen der Funktionsschichten führen kann. Bei diesem kritischen Arbeitsschritt ist die Ausbeute nur niedrig.

Es ist kostengünstiger, dünne Funktionsschichten dadurch in Glaslaminate zu integrieren, daß die Schichten zunächst in einen kontinuierlichen Prozeß auf eine hochtransparente Substratfolie aufgebracht werden und dann die beschichtete Substratfolie in den Glasverbund eingebaut wird.

Als Material für die Substratfolie kommt u.a. Polyethylenterephthalat in Frage. Die beschichtete Substratfolie wird zwischen zwei Folien aus Polyvinylbutyral eingebettet und so Verbundsicherheitsglasscheiben mit dem Aufbau Glas/PVB-Folie/(beschichtete Folie)/PVB-Folie/Glas hergestellt. Werden kommerziell verfügbare Polyethylenterephthalatfolien verwendet, so wird an den fertigen Glaslaminaten beobachtet, daß die beschichtete Substratfolie Wellen bildet. Das Aussehen der Glaslaminate und die Verzerrungsfreiheit des einfallenden Lichtes werden dadurch so stark gestört, daß ein Einsatz der Glaslaminate nicht in Frage kommt.

In der europäischen Patentschrift 0 077 672 wird eine Lösung dieses Problems vorgeschlagen. Die wesentliche Idee dabei ist, daß nur solche Folien aus Polyethylenterephthalat als Substratfolie verwendet werden, die sehr spezielle thermomechanische Eigenschaften besitzen. Damit ist gemeint, daß der thermische Schrumpf E einer Folie und ihre Dicke d die folgenden Relationen erfüllen:

$$4{,}4 \geq E \geq 0{,}00028 \times (d-128)^2 \qquad (1)$$

$$d < 125 \qquad (2)$$

Dabei steht E für den thermischen Schrumpf, gemessen in %, der sich nach einer 30-minütigen Temperaturbelastung von 120 °C einstellt, und d für die in $\mu$m gemessene Foliendicke. Die Beschränkung des zugelassenen thermischen Schrumpfs auf das in (1) angegebene Intervall ist darin begründet, daß einerseits ein höherer Schrumpf zu einer Beschädigung der Funktionsschicht führt und andererseits mit einem niedrigeren Schrumpf die immer auftretenden kleinen Planlagefehler der Folie nicht mehr ausgeglichen werden können.

Es zeigt sich jedoch, daß es selbst mit Substratfolien, die die beiden Relationen (1) und (2) erfüllen, schwierig ist, Glaslaminate herzustellen, die ein einwandfreies Aussehen besitzen. Besonders Folien, die in den Randbereich des durch die Relationen (1) und (2) definierten Gebiets der E-d-Ebene fallen, führen in den Glaslaminaten zu einer beschädigten Funktionsschicht bzw. zu Planlagefehlern.

Die Vorschrift (1) impliziert, daß der Schrumpf von Folien umso genauer eingestellt sein muß, je dünner die Folie ist. Für Folien der Dicke d = 12 $\mu$m liefern (1) und (2) beispielsweise einen Schrumpf im Bereich 4,4 $\geq$ E $\geq$ 3,7. Folien der Dicke d = 2,6 $\mu$m und kleiner sind durch (1) von der Anwendung ausgeschlossen. In der genannten Patentschrift wird der Bereich

$$3{,}9 \geq E \geq 0{,}00028 \times (d-130)^2 \qquad (3)$$
$$d < 125$$

als besonders günstig bezeichnet. Durch (3) werden sogar Folien der Dicke d kleiner/gleich 12 $\mu$m von der Anwendung ausgeschlossen.

Aufgabe der Erfindung ist es, ein Verfahren zur Herstellung von Verbundsicherheitsglas und ein Verbundsicherheitsglas zu schaffen, das mit zumindest einer zusätzlichen Funktionsschicht auf einer Substratfolie ausgestattet ist, wobei die Substratfolie keinen Beschränkungen hinsichtlich des thermischen Schrumpfes während des Laminierens der einzelnen Schichten zu dem Verbundsicherheitsglas unterliegt.

Diese Aufgabe wird erfindungsgemäß dadurch gelöst, daß ein Film auf eine Kunststoffolie aufgebracht wird, die zwischen weiteren Schichten eingelegt wird und über die Ränder der weiteren Schichten übersteht und daß die Kunststofffolie während des Aufeinanderlaminierens der Schichten mit dem Verbundsicherheitsglas entlang ihrer überstehenden Teile festgehalten wird.

Das Festhalten der Kunststoffolie in der Planlage, während des Aufbringens eines Preßdruckes auf den bewegten Schichtstapel, der zu einem Glasverbund zusammengefügt wird, erfolgt auf allen vier Seiten der Kunststoffolie. Ebenso ist es möglich, daß das Festhalten der Kunststoffolie in einer sphärisch gekrümmten Fläche der Kunststoffolie, während des Aufbringens eines Preßdruckes auf den Schichtstapel, aus dem ein Glasverbund zusammengefügt wird, auf alle vier Seiten der Kunststoffolie erfolgt.

In Ausgestaltung des Verfahrens wird das Festhalten der Kunststoffolie während des letzten Verfahrensschritts zur Fertigstellung des Verbundsicherheitsglases, bei dem Druck und Wärme auf den Clasvorverbund einwirken, aufrechterhalten. Die Kunststoffolie wird durch Sputtern, Vakuumaufdampfen, Bedrucken oder Naßbeschichten mit einem Film beschichtet, der aus einer oder mehreren Funktionsschichten besteht.

Die Ausgestaltung der Vorrichtung zur Durchführung des Verfahrens ergibt sich aus den Merkmalen der Patentansprüche 6 bis 10.

Der wesentliche Vorteil der Erfindung besteht darin, daß bei der Auswahl der Substratfolie nicht mehr darauf geachtet werden muß, daß ihre thermomechanischen Eigenschaften sehr eng vorgegebene Spezifikationen erfüllen müssen. Unter dem Gesichtspunkt der thermomechanischen Eigenschaften ist die Auswahl der Substratfolie vielmehr weitgehend frei.

Die Erfindung wird im folgenden anhand der Zeichnungen näher beschrieben. Es zeigen:

Fig. 1     einen Schnitt durch die Schichten eines Glas-Folien-Laminats nach der Erfindung,

Fig. 2     schematisch im Schnitt das Einspannen des Glas-Folien-Laminats in eine Haltevorrichtung,

Fig. 3A     eine Draufsicht auf einen Rahmen als Haltevorrichtung für die beschichtete Kunststoffolie des Glas-Folien-Laminats,

Fig. 3B     einen Schnitt entlang der Linie I-I in Figur 3A,

Fig. 4A     eine Draufsicht auf Kluppenketten als Haltevorrichtung für die beschichtete Kunststofffolie des Glas-folien-Laminats,

Fig. 4B     einen Schnitt entlang der Linie II-II in Figur 4A, und

Fig. 5     eine Ansicht eines Innenteils der Haltevorrichtung nach Figur 4B.

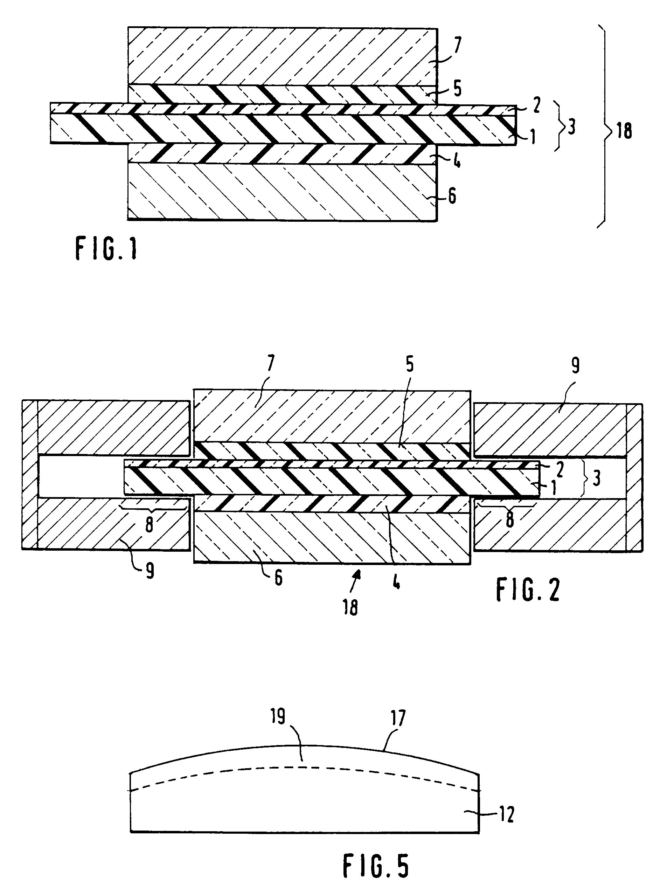

Der Schnitt in Figur 1 zeigt ein Verbundsicherheitsglas, das aus einem Glas/Polyvinylbutyral-Folie/Kunststoffolie mit Funktionsschicht/Polyvinylbutyral-Folie/Glas-Laminat besteht. Die beschichtete Kunststoffolie 3 aus einer Substratfolie 1 und einer oder mehreren Funktionsschichten 2 steht über den Rand der übrigen Schichten des Laminats 18 über, bei denen es sich um die an beiden Seiten der Kunststoffolie 3 anliegenden Polyvinylbutyral-Folien 4, 5 sowie die daran anschließenden Glasscheiben 6 und 7 handelt.

Das Material der Substratfolie 1 ist Polyethylenterephthalat, Polyamid oder Polyethersulfon. Für die Substratfolie wird beispielsweise eine Folie aus Polyethylenterephthalat (Hostaphan® 4400 der Hoechst AG) mit einer Dicke von 36 $\mu$m verwendet, die in einer Kathodenzerstäubungsanlage mit einem lichtdurchlässigen, wärmereflektierenden Film 2 beschichtet wird. Der lichtdurchlässige und wärmereflektierende Film 2 besteht beispielsweise aus zwei Metallschichten und zwei dielektrischen Schichten und besitzt folgenden Aufbau:

Dielektrische Schicht/Ag/metallisches Indium-Zinnoxid/dielektrische Schicht.

Als dielektrische Schicht können Zinnoxid oder Zinnoxynitrid der Form $SnO_2$ bzw. $SnO_xN_y$ mit $1 \leq x \leq 2$ und $0 \leq y \leq 1$ Verwendung finden.

In Figur 2 ist schematisch das Festhalten der überstehenden Kunststoffolie 3 durch einen ebenen Rahmen 9 dargestellt. Die Kunststoffolie 3 steht an jeder Seite mit einem Teil 8 über die Ränder der PVB-Folien 4, 5 und der Glasscheiben 6, 7 über. Die überstehenden Ränder bzw. Teile 8, 8 der beschichteten Kunststoffolie 3 werden von dem Rahmen 9 festgehalten und in diesem eingespannt.

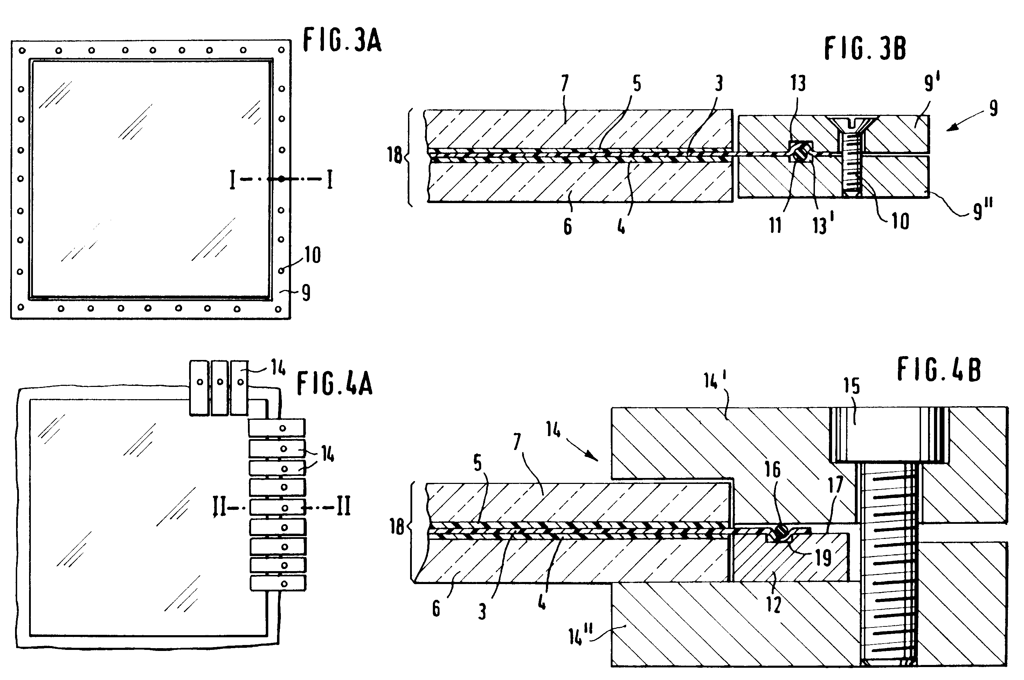

Die Figuren 3A und 3B zeigen eine Draufsicht bzw. einen Schnitt durch eine zweigeteilte Klemmeinrichtung in Gestalt eines Rahmens 9, der aus zwei durch Schrauben 10 miteinander verbundenen Teile 9' und 9" besteht. In jedem der beiden Teile 9' und 9" befindet sich eine umlaufende Nut 13, 13' in den einander zugewandten Flächen der Teile. Diese beiden Nuten 13, 13' sind im verschraubten Zustand der beiden Teile 9′ und 9″ zur Deckung gebracht und nehmen einen O-Ring 11 auf. Die beschichtete Kunststoffolie umschlingt den O-Ring entlang eines Teilumfangs, wobei der O-Ring die Kunststofffolie in der einen Nut 13 festklemmt. Die Dicke des Rahmens 9 ist kleiner als die Gesamtdicke des Laminats 18, so daß das Laminat 18 zusammen mit dem Rahmen 9 durch eine nicht gezeigte Walzenanlage zur Herstellung des Glasvorverbunds, wie dies im Stand der Technik bekannt ist, hindurchlaufen kann. In der Walzenanlage wird das Laminat 18 unter Ausübung von Preßdruck auf etwa 90 °C aufgeheizt. Nach dem Durchlaufen durch die Walzenanlage wird der Glasvorverbund zusammen mit dem Rahmen 9 in einen Autoklaven gebracht, wo unter Druck und einer Temperatur bis 140 °C das endgültige Laminat 18 bzw. die Verbundsicherheitsglasscheibe hergestellt wird.

Bei dem Aufheizen dehnt sich die festgehaltene Kunststoffolie 3 aus, und es kommt dabei zu einer Wellenbildung, die jedoch nach Beendigung des Laminierprozesses vollkommen verschwunden ist. Beim Abkühlen übt der Rahmen 9 auf die Ränder der Kunststoffolie 3 eine Zugspannung aus, welche die sich zusammenziehende Kunststofffolie vollkommen glättet, so daß in der fertigen Verbundsicherheitsglasscheibe keine Wellen irgendeiner Größe feststellbar sind. Die fertigen Verbundsicherheitsglasscheiben besitzen somit eine zusätzliche Funktionsschicht, welche beispielsweise die Wärmereflexion vergrößert, ohne die Lichtdurchlässigkeit zu beeinträchtigen, und haben ein einwandfreies Aussehen.

Weitere Funktionsschichten können beispielsweise Radioantennen, transparente und elektrisch beheizbare Schichten, transparente Elektroden für Displays und dergleichen sein.

In den Figuren 4A und 4B sind eine Draufsicht und ein Schnitt entlang der Linie II-II in Figur 4A einer Klemmeinrichtung 14 dargestellt, die aus einer Anzahl von nebeneinander angeordneten Kluppen besteht. Die Kluppen bilden entlang den Rändern des Laminats 18 Kluppenreihen. Jede Kluppe umfaßt zwei Außenteile 14′, 14″ und ein Innenteil 12, die durch eine Schraube zusammengehalten werden. Die beiden Außenteile 14′ und 14″ umfassen das Laminat 18 an den Rändern, und die Höhe bzw. Dicke der Kluppen 14 übersteigt die Dicke des Laminats 18. Derartige Kluppen 14 werden anstelle eines ebenen Rahmens für den Anwendungsfall eingesetzt, bei dem die herzustellende Verbundsicherheitsglasscheibe sphärisch gekrümmt ist.

Wie aus Figur 5 ersichtlich ist, weist das Innenteil 12 eine gewölbte Oberseite 17 auf, in der eine Nut 19 eingelassen ist, die einen O-Ring 16 aufnimmt. Die Bodenfläche der Nut 19 verläuft mit der gleichen Krümmung wie die gewölbte Oberseite, was in Figur 5 durch die gestrichelte Linie angedeutet ist. Zwischen dem O-Ring 16 und der Bodenflache der Nut 19 ist die Kunststoffolie 3 eingeklemmt, wie aus dem Schnitt in Figur 4B ersichtlich ist.

Die Glasvorverbunde aus sphärisch gekrümmten Laminaten 18 werden in der Weise hergestellt, daß die Laminate mitsamt den Kluppenreihen in einen Vakuumsack eingebracht werden, der sich in einer Wärmekammer befindet und aus dem Luft abgepumpt wird. Dabei legt sich der Vakuumsack, der beispielsweise aus Polypropylen oder dergleichen Material besteht, an das Laminat 18 an und übt Druck aus, so daß das Laminat, unter gleichzeitiger Temperatureinwirkung, zu dem Glasvorverbund zusammengefügt wird. Nach der Behandlung in der Wärmekammer wird der Glasvorverbund in einem Autoklaven unter Druck- und Wärmeeinwirkung in die endgültige Form der Verbundsicherheitsglasscheibe gebracht.

Nach dem beschriebenen Verfahren lassen sich ebene und sphärisch gekrümmte Verbundsicherheitsglasscheiben gleichermaßen herstellen. Konstruktive Unterschiede in der jeweils verwendeten Haltevorrichtung für die beschichtete Kunststofolie haben ihre Ursache in unterschiedlich geformten Glasscheiben und sind nicht prinzipieller Art. Kunststofflaminate mit dem Aufbau Polyvinylbutyral/Folie/Kunststoffolie mit Funktionsschich ten Polyvinylbutyral-Folie werden dadurch hergestellt, daß die die Funktionsschichten tragende Kunststofffolie während des Laminiervorgangs entlang ihrer Ränder in einer Haltevorrichtung eingespannt ist. Wird das Kunststofflaminat in einer Plattenpresse hergestellt, so wird ein Rahmen als Haltevorrichtung für die Kunststoffolie verwendet. Bei einem Laminiervorgang von Rolle zu Rolle wird die Kunststoffolie von Kluppenketten gehalten.

Die Verwendung von Haltevorrichtungen bei der Herstellung von Kunststofflaminaten und Glaslaminaten erlaubt den Einsatz von Kunststoffolien als Substrat für die Funktionsschichten, die ohne die Verwendung von Haltevorrichtungen zu einem schlechten Aussehen der Laminate durch Wellenbildung im Film der Kunststoffolie führen würden.

Es können alle hochtransparenten Kunststoffolien, die thermischen Schrumpf besitzen, verwendet werden. Beispielsweise können Folien aus Polyethylenterephthalat, Polyamid, Polyethersulfon u.a. eingesetzt werden. Die Dicke der Folien wird durch das Verfahren prinzipiell nicht eingeschränkt. Die Dicke der eingesetzten Kunststoffolien wird allein durch die Anforderungen in der Praxis und die Verarbeitungsbedingungen bestimmt.

Bei der oder den Funktionsschichten kann es sich um eine einzelne Schicht oder ein System von Schichten handeln. Die Funktionsschicht kann durch Beschichten, Bedrucken, Vakuummetallisieren, Sputtern oder dergleichen auf die Substratfolie aufgebracht werden.

**Patentansprüche**

1. Verfahren zur Herstellung von Verbundsicherheitsglas aus mehreren Schichten, von denen einige Funktionsschichten sind, dadurch gekennzeichnet, daß ein Film auf eine Kunststoffolie aufgebracht wird, die zwischen weiteren Schichten eingelegt wird und über die Ränder der weiteren Schichten übersteht und daß die Kunststoffolie während des Aufeinanderlaminierens der Schichten zu dem Verbundsicherheitsglas entlang ihrer überstehenden Teile festgehalten wird.

2. Verfahren nach Anspruch 1, dadurch gekennzeichnet, daß das Festhalten der Kunststoffolie in der Planebene der Kunststoffolie, während des Aufbringens eines Preßdruckes auf den Schichtstapel, der zu einem Glasverbund zusammengefügt wird, auf allen vier Seiten der Kunststoffolie erfolgt.

3. Verfahren nach Anspruch 1, dadurch gekennzeichnet, daß das Festhalten der Kunststoffolie in einer sphärisch gekrümmten Fläche der Kunststoffolie, während des Aufbringens eines Preßdruckes auf den Schichtstapel, aus dem ein Glasverbund zusammengefügt wird, auf allen vier Seiten der Kunststoffolie erfolgt.

4. Verfahren nach den Ansprüchen 2 und 3, dadurch gekennzeichnet, daß das Festhalten der Kunststoffolie während des letzten Verfahrensschritts zur Fertigstellung des Verbundsicherheitsglases, bei dem Druck und Wärme auf den Glasvorverbund einwirken, aufrechterhalten wird.

5. Verfahren nach Anspruch 1, dadurch gekennzeichnet, daß die Kunststoffolie durch Sputtern, Vakuumaufdampfen, Bedrucken oder Naßbeschichten mit einem Film beschichtet wird, der aus einer oder mehreren Schichten besteht, von denen einige Funktionsschichten sind.

6. Vorrichtung zur Durchführung des Verfahrens nach den Ansprüchen 1 bis 5, dadurch gekennzeichnet, daß sie aus einer geteilten Klemmeinrichtung (9; 14) besteht, zwischen deren Teilen (9', 9''; 14', 12, 14'') die den Film tragende Kunststoffolie (3) an allen vier Seiten festgehalten ist.

7. Vorrichtung nach Anspruch 6, dadurch gekennzeichnet, daß die Klemmeinrichtung ein Rahmen (9) aus zwei durch Schrauben (10) miteinander verbundenen Teilen (9', 9'') ist und daß die Dicke des Rahmens (9) kleiner als die Gesamtdicke des Glas/Polyvinylbutyral-Folie/Kunststoffolie mit Funktionsschicht/Polyvinylbutyral-Folie/Glas-Laminats (18) ist.

8. Vorrichtung nach Anspruch 7, dadurch gekennzeichnet, daß in jedem der beiden Teile (9', 9'') des Rahmens (9) eine umlaufende Nut (13, 13') in den einander zugewandten Flächen vorhanden ist und daß in die zueinander in Deckung liegenden Nuten (13, 13') ein O-Ring (11) eingelegt ist, den die beschichtete Kunststoffolie über einen Teilumfang umschlingt und der die Kunststoffolie in der einen Nut (13) festklemmt.

9. Vorrichtung nach Anspruch 6, dadurch gekennzeichnet, daß die Klemmeinrichtung (14) aus einer Anzahl von nebeneinander angeordneten Kluppen besteht, daß jede Kluppe zwei Außenteile (14', 14'') und ein Innenteil (12) umfaßt, die durch eine Schraube (15) zusammengehalten sind und daß die beiden Außenteile (14', 14'') das Glas/Polyvinylbutyralfolie/Kunststoffolie mit lichtdurchlässigem und wärmereflektierendem Film/Polyvinylbutyral-Folie/Glas-Laminat (18) an den Rändern umfassen.

10. Vorrichtung nach Anspruch 9, dadurch gekennzeichnet, daß das Innenteil (12) eine gewölbte Oberseite (17) aufweist, in der eine Nut (19) eingelassen ist, die einen O-Ring (16) aufnimmt und daß zwischen dem O-Ring (16) und der Bodenfläche der Nut (19) die Kunststoffolie (3) eingeklemmt ist.

**Claims**

1. A process for producing laminated safety glass composed of a plurality of layers, some of which are function layers, which comprises depositing a film on a plastic sheet which is inserted between further layers and projects beyond the edges of the further layers, and which comprises clamping the plastic film along its projecting parts while the layers are being laminated onto each other to form the laminated safety glass.

2. The process as claimed in claim 1, wherein the plastic sheet is clamped in the flat plane on all four sides of the plastic sheet while compaction pressure is applied to the stack of layers which is joined together to form a glass laminate.

3. The process as claimed in claim 1, wherein the plastic sheet is clamped in a spherically curved area of the plastic sheet on all four sides of the plastic sheet while a compaction pressure is applied to the stack of layers which is joined together to form a glass laminate.

4. The process as claimed in claims 2 and 3, wherein the clamping of the plastic sheet is maintained during the final process step for finishing the laminated safety glass in which pressure and heat act on the glass prelaminate.

5. The process as claimed in claim 1, wherein the plastic sheet is coated by sputtering, vacuum vapor deposition, printing or wet coating with a film which is composed of one or more layers, some of which are function layers.

6. A device for carrying out the process as claimed in claims 1 to 5, which is composed of a divided clamping device (9; 14) between whose parts (9', 9''; 14', 12, 14'') the plastic sheet (3) carrying the film is clamped on all four sides.

7. The device as claimed in claim 6, wherein the clamping device is a frame (9) composed of two parts (9', 9'') joined to each other by screws (10) and wherein the thickness of the frame (9) is less than the total thickness of the glass/polyvinylbutyral sheet/plastic sheet comprising a function layer/polyvinylbutyral sheet/glass laminate (18).

8. The device as claimed in claim 7, wherein a peripheral groove (13, 13') is present in each of the two parts (9', 9'') of the frame (9) in the faces facing each other and wherein an O-ring (11) which is wrapped around, over a partial circumference, by the coated plastic sheet and which clamps the plastic sheet in the one groove (13) is laid in the grooves (13, 13') which are situated in registration with respect to each other.

9. The device as claimed in claim 6, wherein the clamping device (14) is composed of a number of tongs disposed next to each other, wherein each tong comprises two outside parts (14', 14'') and an inside part (12) which are held together by a screw (15), and wherein the two outside parts (14', 14'') grip the glass/polyvinylbutyral sheet/plastic sheet comprising light-transparent and heat-reflecting film/polyvinylbutyral sheet/glass laminate (18) at the edges.

10. The device as claimed in claim 9, wherein the inside part (12) has a convex upper side (17) into which a groove (19) is sunk which accommodates an O-ring (16) and wherein the plastic sheet (3) is clamped between the O-ring (16) and the base surface of the groove (19).

**Revendications**

1. Procédé de fabrication de verres de sécurité feuilletés à partir de plusieurs couches dont certaines sont des couches fonctionnelles, caractérisé en ce qu'on dépose un film sur une feuille de résine synthétique qui est intercalée entre d'autres couches et déborde au-delà des bords des autres couches et en ce que la feuille de résine synthétique est maintenue le long de ses parties débordantes pendant la stratification des couches les unes sur les autres qui donne naissance au verre de sécurité feuilleté.

2. Procédé selon la revendication 1, caractérisé en ce que le maintien de la feuille de résine synthétique à plat pendant l'application d'une pression de compression sur l'empilement de couches, qui est assemblé en un verre feuilleté, s'effectue sur les quatre côtés de la feuille de résine synthétique.

3. Procédé selon la revendication 1, caractérisé en ce que le maintien de la feuille de résine synthétique dans une surface courbe sphérique de la feuille de résine synthétique pendant l'application d'une pression de compression sur l'empilement de couches dont l'assemblage donne naissance au verre feuilleté s'effectue sur les quatre côtés de la feuille de résine synthétique.

4. Procédé selon les revendications 2 et 3, caractérisé en ce que le maintien de la feuille de résine synthétique est conservé pendant la dernière phase du procédé de fabrication du verre de sécurité feuilleté, dans laquelle la pression et la chaleur agissent sur le préfeuilleté.

5. Procédé selon la revendication 1, caractérisé en ce que la feuille de résine synthétique est revêtue d'un film par pulvérisation cathodique, évaporation sous vide, impression ou enduction par voie humide, ce film étant composé d'une ou plusieurs couches dont certaines sont des couches fonctionnelles.

6. Dispositif pour la mise en oeuvre du procédé selon les revendications 1 à 5, caractérisé en ce qu'il est composé d'un dispositif de serrage (9 ; 14) en plusieurs parties, entre les parties (9', 9" ; 14', 12, 14") duquel la feuille de résine synthétique (3) portant le film est maintenue le long de ses quatre côtés.

7. Dispositif selon la revendication 6, caractérisé en ce que le dispositif de serrage est un cadre (9) composé de deux parties (9', 9") assemblées entre elles par des vis (10) et en ce que l'épaisseur du cadre (9) est plus petite que l'épaisseur totale du feuilleté (18) de verre/feuille de polyvinylbutyral/feuille de résine synthétique munie d'une couche fonctionnelle/feuille de polyvinylbutyral/verre.

8. Dispositif selon la revendication 7, caractérisé en ce qu'une rainure périphérique (13, 13') est ménagée dans chacune des deux parties (9', 9") du cadre (9), dans la surface qui est dirigée vers la surface de l'autre partie, et en ce que, dans les rainures (13, 13') qui sont en coïncidence l'une par rapport à l'autre, est logée une bague torique (11) que la feuille de résine synthétique revêtue embrasse sur une partie de sa circonférence et qui coince la feuille de résine synthétique dans une rainure (13).

9. Dispositif selon la revendication 6, caractérisé en ce que le dispositif de serrage (14) est composé d'un certain nombre de pinces disposées les unes à côté des autres, en ce que chaque pince comprend deux parties extérieures (14', 14") et une partie intérieure (12) qui sont maintenues assemblées par une vis (15), et en ce que les deux parties extérieures (14', 14") enserrent le long de ses bords le feuilleté (18) verre/feuille de polyvinylbutyral/feuille de résine synthétique munie d'un film transparent à la lumière et réfléchissant la chaleur/feuille de polyvinylbutyral/verre.

10. Dispositif selon la revendication 9, caractérisé en ce que la partie intérieure (12) présente une face supérieure bombée (17) dans laquelle est ménagée une rainure (19) qui reçoit une bague torique (16) et en ce que la feuille de résine synthétique (3) est coincée entre la bague torique (16) et la surface de fond de la rainure (19).

FIG.1

FIG.2

FIG.5

FIG. 3A   FIG. 3B

FIG. 4A   FIG. 4B